# EUROPÄISCHE PATENTANMELDUNG

(11) **EP 4 834 731 A1**
(43) Veröffentlichungstag der Anmeldung: **04.11.2026**
(21) Anmeldenummer: 26161341.8
(22) Anmeldetag: 27.02.2026
(51) Int. Cl.: B62D 25/16, B60R 3/00

(54) **KOTFLÜGELSYSTEM FÜR EINE LANDWIRTSCHAFTLICHE ARBEITSMASCHINE SOWIE LANDWIRTSCHAFTLICHE ARBEITSMASCHINE**

(30) Priorität: 30.04.2025 DE 102025116663
(71) Anmelder: CLAAS Selbstfahrende Erntemaschinen GmbH, 33428 Harsewinkel (DE)
(72) Erfinder: Wernsmann, Thomas, 33428 Harsewinkel (DE); Gausmann, Ludger, 49170 Hagen a.T. (DE)
(74) Vertreter: CLAAS Gruppe

(57) **Zusammenfassung**

Die vorliegende Anmeldung betrifft ein Kotflügelsystem (13) für eine landwirtschaftliche Arbeitsmaschine (1), insbesondere einen Traktor (2), wobei das Kotflügelsystem (13) einen Kotflügel (14) zur zumindest bereichsweisen Einfassung eines Bodeneingriffsmittels (4), insbesondere eines vorderen Bodeneingriffsmittels (4), der Arbeitsmaschine (1) und eine Befestigungseinrichtung (15) zur Befestigung des Kotflügels (14) an der Arbeitsmaschine (1) umfasst. Die landwirtschaftliche Arbeitsmaschine (1) ist dadurch gekennzeichnet, dass das Kotflügelsystem (13) eine Trittstufe (16) umfasst, wobei die Trittstufe (16) an der Befestigungseinrichtung (15), sich an dieser abstützend, vorzugsweise lösbar, angebracht ist.

## Beschreibung

Die vorliegende Anmeldung betrifft ein Kotflügelsystem für eine landwirtschaftliche Arbeitsmaschine gemäß dem Oberbegriff des unabhängigen Patentanspruchs 1. Des Weiteren betrifft die Anmeldung eine landwirtschaftliche Arbeitsmaschine gemäß dem unabhängigen Patentanspruch 14.

Kotflügel sind typischerweise dazu vorgesehen, die Bodeneingriffsmittel von landwirtschaftlichen Arbeitsmaschinen, welche üblicherweise entweder als Räder und/oder als Raupenlaufwerke ausgebildet sind, zumindest teilweise abzudecken, sodass eine Aufwirbelung von Erde eines mittels der Arbeitsmaschine zu bearbeitenden Feldes, die eine Sichtverschlechterung für einen Fahrer der Arbeitsmaschine zur Folge haben kann, verhindert wird. Darüber hinaus kann bei einer Straßenfahrt mit der Arbeitsmaschine verhindert werden, dass Wasser und Schmutz von einer Fahrbahnfläche aufgewirbelt werden und weitere Verkehrsteilnehmer sowie vorbeigehende Passanten behindern.

Ungeachtet der zuvor beschriebenen Schutzfunktion vor Verunreinigungen durch Kotflügel, sind Arbeitsmaschinen im Feldbetrieb regelmäßig einer hohen Schmutzbelastung ausgesetzt. Dies führt dazu, dass die Scheiben einer Kabine der Arbeitsmaschine einer regelmäßigen Reinigung bedürfen, da vorhandene Scheibenwischersysteme oftmals nur einen gewissen Sichtbereich der Scheibe von Verunreinigungen befreien können, Randbereiche der Scheibe allerdings weiterhin verschmutzt bleiben. Die Windschutzscheibe einer Kabine stellt dabei einen Bereich der Arbeitsmaschine dar, der einer besonders hohen Belastung mit Verunreinigungen im Betrieb unterliegt und daher regelmäßig von einer Person gereinigt werden muss. Insbesondere bei höher motorisierten und somit größer dimensionierten Arbeitsmaschinen ergeben sich allerdings aufgrund der Größe der Windschutzscheibe und der Dimensionierung der Arbeitsmaschine durchaus erhebliche Herausforderungen mit Blick auf die Zugänglichkeit der Windschutzscheibe zwecks Reinigung. Wünschenswert wäre eine tragfähige Struktur an der Arbeitsmaschine in der Nähe der Windschutzscheibe, welche einer mit der Reinigung der Windschutzscheibe beauftragten Person als Plattform dient.

Aus der US 4,442,477 A1 ist es im Kontext von Wartungsarbeiten am Antriebsaggregat eines Traktors bekannt, einen Kotflügel als Trittstufe auszugestalten, sodass die mit der Wartung des Motors beauftrage Person auf den Kotflügel steigen kann und somit an das im Motorraum des Traktors angeordnete Antriebsaggregat gelangen kann.

Kotflügel von modernen Arbeitsmaschinen sind in der Regel aus Kunststoff ausgebildet. Eine Integration einer Trittstufe in den Kotflügel ist daher ungeeignet, da sich der Kotflügel aufgrund des Gewichts der Person verformen würde, was ein erhebliches Sicherheitsrisiko für die auf dem Kotflügel befindliche Person bedeuten würde. Weiterhin sind Kotflügel oftmals der Formgebung des Bodeneingriffsmittels nachempfunden und weisen demnach eine runde Formgebung auf. Die Integration einer Trittstufe in eine solche Formgebung bedeutet einen höheren konstruktiven Aufwand, was zu höheren Fertigungskosten führt und einen solchen Kotflügel wirtschaftlich uninteressant werden lässt.

Ausgehend von dem vorstehend genannten Stand der Technik ist es demnach die Aufgabe der vorliegenden Erfindung eine Vorrichtung anzugeben, welche eine gute Zugänglichkeit für einen Bediener zur Windschutzscheibe einer Kabine einer landwirtschaftlichen Arbeitsmaschine zwecks Reinigung derselben erlaubt.

Diese Aufgabe wird erfindungsgemäß durch die hier offenbarten Ausführungsformen gelöst, die insbesondere durch den Gegenstand des unabhängigen Patentanspruchs 1 definiert sind. Die abhängigen Ansprüche 2 bis 13 betreffen weitere Ausführungsformen. Verschiedene Aspekte und Ausführungsformen dieser Aspekte sind auch in der nachstehenden Zusammenfassung und Beschreibung offenbart, die zusätzliche Merkmale und Vorteile bieten.

Demnach betrifft die vorliegende Erfindung ein Kotflügelsystem für eine landwirtschaftliche Arbeitsmaschine, insbesondere einen Traktor. Das Kotflügelsystem umfasst einen Kotflügel zur zumindest bereichsweisen Einfassung eines Bodeneingriffsmittels, insbesondere eines vorderen Bodeneingriffsmittels, der Arbeitsmaschine und eine Befestigungseinrichtung zur Befestigung des Kotflügels an der Arbeitsmaschine. Das Kotflügelsystem ist dadurch gekennzeichnet, dass es eine Trittstufe umfasst, wobei die Trittstufe an der Befestigungseinrichtung, sich an dieser abstützend, angebracht ist.

Vorzugsweise ist vorgesehen, dass die Trittstufe an der Befestigungseinrichtung lösbar angebracht ist.

Weiter vorzugsweise ist vorgesehen, dass die Trittstufe beabstandet vom Kotflügel angeordnet ist, und zwar derart, dass Bereiche der Trittstufe den Kotflügel zumindest in Fahrzeughöhenrichtung überdecken.

Die Integration einer zusätzlichen Funktion in das Kotflügelsystem, sodass nicht nur ein Schutz gegen Verunreinigungen geschaffen wird, sondern auch eine Plattform für Reinigungsarbeiten an der Windschutzscheibe der Kabine und Wartungsarbeiten an Motor- und/oder Abgaskomponenten zur Verfügung steht, reduziert den Bedarf an zusätzlichen komplexen Komponenten, die im Hinblick auf den Aufbau der Arbeitsmaschine und den zur Verfügung stehenden Bauraum Herausforderungen mit sich bringen. Die erfindungsgemäße Lösung bedarf lediglich eines geringen Bauraums, was zu Kosteneinsparungen bei der Herstellung und Montage führt. Die Anbringung und die Abstützung der Trittstufe an der Befestigungseinrichtung des Kotflügelsystems erhöht dabei die Sicherheit während der Nutzung, da ein Abrutschen des Bedieners oder ein Verformen des Kotflügels verhindert werden. Die Möglichkeit, die Trittstufe vorzugsweise lösbar zu montieren, erhöht die Flexibilität in der Nutzung und ermöglicht eine Anpassung an unterschiedliche Anforderungen im Betrieb der Arbeitsmaschine. Zudem kann die Trittstufe als Nachrüstlösung vorgesehen werden. Durch die beabstandete Anordnung der Trittstufe, wobei Bereiche der Trittstufe den Kotflügel überdecken, wird eine gute Zugänglichkeit zur Windschutzscheibe der landwirtschaftlichen Arbeitsmaschine gewährleistet, ohne die Funktion des Kotflügels oder den Bewegungsradius der Bodeneingriffsmittel nachteilig zu beeinflussen.

Gemäß einer vorteilhaften Weiterbildung der Erfindung ist vorgesehen, dass die Befestigungseinrichtung tragarmförmig ausgebildet ist und einen ersten Endabschnitt zur Anbindung der Befestigungseinrichtung an der Arbeitsmaschine und einen dem ersten Endabschnitt beabstandet gegenüberliegenden zweiten Endabschnitt zur Anbindung des Kotflügels an der Befestigungseinrichtung umfasst, wobei sich zwischen dem ersten Endabschnitt und dem zweiten Endabschnitt ein Zwischenabschnitt erstreckt, wobei die Trittstufe am Zwischenabschnitt angebracht ist.

Durch die tragarmförmige Ausgestaltung der Befestigungseinrichtung mit einem ersten Endabschnitt für die Anbindung an die Arbeitsmaschine und einem zweiten Endabschnitt zur Anbindung des Kotflügels wird eine Anbindungsstelle für die Trittstufe mit hoher Stabilität geschaffen. Aufgrund dieser Ausgestaltung kann die Trittstufe am Zwischenabschnitt angebracht werden, was sich besonders vorteilhaft auf die Lastverteilung während der Nutzung durch einen Bediener auswirkt. Gegenüber der aus dem Stand der Technik bekannten Anordnung einer Trittstufe wird die Gefahr einer Verformung des Kotflügels vermieden, wodurch eine äußerst stabile Plattform für den Bediener bereitgestellt wird, welche sich durch eine hohe Betriebssicherheit auszeichnet. Darüber hinaus stellt die Anbringung der Trittstufe am Zwischenabschnitt mit einer den Kotflügel bereichsweise überlappenden Anordnung eine gute Zugänglichkeit sicher, insbesondere im Bereich von lenkbaren Bodeneingriffsmitteln. Diese tragarmförmige Ausgestaltung in Kombination mit der Anbringung der Trittstufe trägt zudem zu einer Reduktion des Montageaufwands bei und erlaubt eine leichtere Wartung der gesamten Baugruppe durch eine gute Zugänglichkeit.

Vorzugsweise ist vorgesehen, dass die Befestigungseinrichtung als im Wesentlichen L-förmiger Tragarm ausgebildet ist.

Eine Ausgestaltung der Befestigungseinrichtung als im Wesentlichen L-förmiger Tragarm erhöht die strukturelle Stabilität und Verwindungssteifigkeit der Befestigungseinrichtung weiter. Dies erlaubt einerseits eine zuverlässige und sichere Anbindung des Kotflügels, andererseits begünstigt es die Abstützung der Trittstufe an der Befestigungseinrichtung. Eine L-förmige Formgebung trägt dazu bei, Lasten gleichmäßiger zu verteilen und das Risiko von Verformungen oder Beschädigungen über die Lebensdauer zu minimieren. Zudem wird durch die L-förmige Ausgestaltung eine gute Zugänglichkeit zur Trittstufe selbst sichergestellt, da keinerlei Komponenten des Kotflügelsystems störend im Zugangsbereich zur Trittstufe positioniert werden müssen. Dies verringert das Risiko von Unfällen, die durch eine schlechte Zugänglichkeit entstehen könnten.

Gemäß einer vorteilhaften Weiterbildung der Erfindung ist vorgesehen, dass das Kotflügelsystem ein Stützelement für einen Zugang zur Trittstufe umfasst, wobei das Stützelement, vorzugsweise lösbar, an der Befestigungseinrichtung angeordnet ist.

Durch die Anordnung eines zusätzlichen Stützelements kann eine erhöhte Sicherheit beim Zugang zur Trittstufe sichergestellt werden, wodurch die Gefahr eines Abrutschens oder anderer Verletzungen beim Zugang minimiert wird. Die bevorzugte lösbare Anordnung des Stützelements an der Befestigungseinrichtung sorgt weiterhin dafür, dass das Stützelement einfach anzubringen oder zu entfernen ist. Dies ist besonders vorteilhaft, da ein Bediener je nach Anforderungsprofil der Arbeitsmaschine im Betrieb das Stützelement entfernen oder anbringen kann.

Vorzugsweise ist vorgesehen, dass das Stützelement am Zwischenabschnitt der Befestigungseinrichtung zwischen der Anbringungsstelle der Trittstufe und dem ersten Endabschnitt angeordnet ist.

Die Anordnung des Stützelements am Zwischenabschnitt der Befestigungseinrichtung, zwischen der Trittstufe und dem ersten Endabschnitt, fördert die Zugänglichkeit weiter in erheblichem Maße, da ein Aufstieg durch den Bediener treppenartig erfolgen kann.

Weiter vorzugsweise ist vorgesehen, dass das Stützelement als abgekantetes Blech oder als Hohlprofil ausgebildet ist.

Eine Ausgestaltung des Stützelements wahlweise als abgekantetes Blech oder Hohlprofil steigert die Stabilität des Stützelements, wodurch das Risiko von Verformungen bei Belastungen minimiert wird. Gleichzeitig zeichnet sich das Stützelement dabei durch ein sehr geringes Gewicht aus, was sich vorteilhaft auf die Handhabung während einer Montage/Demontage auswirkt. Weiterhin begünstigt diese Ausgestaltung, dass Schmutz, welcher am Schuh eines Bedieners anhaftet und sich während des Aufstiegs löst, durch das Stützelement hindurch auf den Untergrund fallen kann.

Gemäß einer vorteilhaften Weiterbildung der Erfindung ist vorgesehen, dass die Trittstufe eine Tragstruktur umfasst, welche an der Befestigungseinrichtung sich von dieser, vorzugsweise in Richtung des Kotflügels, wegerstreckend angebracht ist, wobei die Trittstufe eine Trittflächenstruktur umfasst, welche an der Tragstruktur angeordnet ist.

Vorzugsweise ist vorgesehen, dass die Trittflächenstruktur an der Tragstruktur lösbar angebracht ist.

Weiter vorzugsweise ist vorgesehen, dass die Trittflächenstruktur derart an der Tragstruktur angebracht ist, dass die gesamte Trittflächenstruktur den Kotflügel in Fahrzeughöhenrichtung überdeckt.

Durch die Ausrichtung der Tragstruktur wird sichergestellt, dass die Trittstufe sich nicht nachteilig auf den Bewegungsradius der lenkbaren Bodeneingriffsmittel auswirkt bzw. diesen einschränkt. Gleichzeitig wird durch die Überdeckung eine im Hinblick auf die Bauraumnutzung und Zugänglichkeit zur Windschutzscheibe optimale Position der Trittflächenstruktur geschaffen.

Gemäß einer vorteilhaften Weiterbildung der Erfindung ist vorgesehen, dass das Stützelement, die Trittflächenstruktur und/oder die Tragstruktur zumindest bereichsweise eine Profilierung aufweisen.

Die Schaffung einer bereichsweisen Profilierung erhöht die Rutschfestigkeit und damit die Sicherheit während der Nutzung der Trittstufe. Diese Profilierung sorgt dafür, dass der Bediener stets einen stabileren Halt hat, insbesondere unter sehr anspruchsvollen Bedingungen, wie sie häufig bei einem Einsatz von Arbeitsmaschinen vorkommen. Im Vergleich zu einer glatten Oberfläche, sorgt eine bereichsweise strukturierte Oberfläche für einen besseren Grip und steigert somit einerseits die wirkliche Sicherheit sowie andererseits die durch den Bediener wahrgenommene Sicherheit während der Benutzung der Trittstufe als Plattform für Reinigungs- und/oder Wartungsarbeiten an der Arbeitsmaschine in erheblichem Maße.

Gemäß einer vorteilhaften Weiterbildung der Erfindung ist vorgesehen, dass in der Trittflächenstruktur bereichsweise Öffnungen ausgebildet sind.

Die Schaffung von Öffnungen bereichsweise in der Trittflächenstruktur begünstigt die Sicherheit während der Benutzung der Trittstufe durch einen Bediener weiter. Durch die Öffnungen wird es möglich, Wasser und Schmutz effizient von der Trittflächenstruktur abzuführen, was das Risiko von Rutschunfällen verringert und dem Benutzer einen stabilen Stand garantiert. Gegenüber massiven Trittflächenstrukturen kann eine Trittflächenstruktur mit Öffnungen das Gewicht der Trittstufe reduzieren, ohne dabei die Stabilität zu beeinträchtigen.

Gemäß einer vorteilhaften Weiterbildung der Erfindung ist vorgesehen, dass die Tragstruktur einen Aufnahmeabschnitt zur Anordnung der Trittflächenstruktur und einen Befestigungsabschnitt zur Anbringung der Trittstufe an der Befestigungseinrichtung umfasst.

Die Aufteilung der Tragstruktur in einen Befestigungsabschnitt und einen Aufnahmeabschnitt ermöglicht eine effektive Montage und Demontage der Trittstufe, wodurch Wartungsarbeiten oder eine bedarfsweise Anpassung des Kotflügelsystems an die Anforderungen der Arbeitsmaschine im Betrieb begünstigt werden.

Gemäß einer vorteilhaften Weiterbildung der Erfindung ist vorgesehen, dass der Aufnahmeabschnitt der Tragstruktur als Doppel-T-Profil ausgebildet ist, wobei die Trittflächenstruktur ein erstes Trittflächenelement und ein zweites Trittflächenelement umfasst, wobei ein Trittflächenelement der Trittflächenstruktur jeweils in einem zwischen dem Steg und den beiden Schenkeln des Doppel-T-Profils gebildeten Freiraum des Aufnahmeabschnitts, vorzugsweise lösbar, angeordnet ist.

Eine Ausgestaltung des Aufnahmeabschnitts der Tragstruktur als Doppel-T-Profil stellt eine hohe Stabilität bei gleichzeitiger Modularität des Kotflügelsystems sicher. Durch die Doppel-T-Form wird eine optimierte Lastenverteilung und Kraftleitung erzielt, wobei die strukturelle Steifigkeit keinerlei Beeinträchtigung erfährt. Die Anordnung der Trittflächenelemente in den Freiräumen zwischen dem Steg und den Schenkeln des Doppel-T-Profils erlaubt eine unkomplizierte Befestigung der Trittflächenstruktur, wodurch die Wartungsfreundlichkeit gesteigert werden kann.

Die erfindungsgemäße Aufgabe wird ferner durch eine landwirtschaftliche Arbeitsmaschine, insbesondere einen Traktor, gelöst, wobei die Arbeitsmaschine zumindest zwei lenkbare Bodeneingriffsmittel umfasst. Die Arbeitsmaschine ist dadurch gekennzeichnet, dass sie zumindest ein solches Kotflügelsystem umfasst, welches zumindest einem der Bodeneingriffsmittel zugeordnet ist.

Die vorliegende Erfindung wird nachstehend anhand der in den Figuren abgebildeten Ausführungsformen näher beschrieben.

Es zeigen:
- FIG. 1:: eine schematische und exemplarische Ansicht einer erfindungsgemäßen landwirtschaftlichen Arbeitsmaschine in Gestalt eines Traktors;
- FIG. 2:: eine schematische und exemplarische Seitenansicht der erfindungsgemäßen landwirtschaftlichen Arbeitsmaschine mit einem erfindungsgemäßen Kotflügelsystem;
- FIG. 3:: eine schematische und exemplarische Draufsicht der erfindungsgemäßen landwirtschaftlichen Arbeitsmaschine mit dem erfindungsgemäßen Kotflügelsystem; und
- FIG. 4: eine schematische und exemplarische Detailansicht des erfindungsgemäßen Kotflügelsystems.

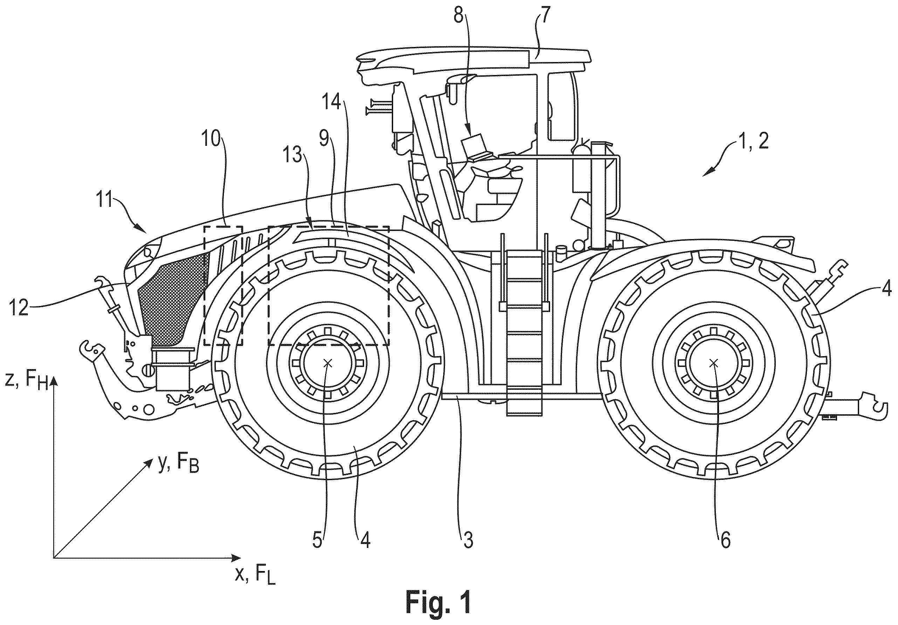

FIG. 1 zeigt eine erfindungsgemäße landwirtschaftliche Arbeitsmaschine 1 in Gestalt eines Traktors 2 in einer Seitenansicht, wobei der grundsätzliche Aufbau eines Traktors als dem Fachmann bekannt angesehen wird. Die erfindungsgemäße landwirtschaftliche Arbeitsmaschine 1 kann anhand von drei Erstreckungsrichtungen räumlich definiert werden, die durch ein Koordinatensystem in FIG. 1 kenntlich gemacht sind. Die erste Erstreckungsrichtung ist dabei die Längsrichtung der landwirtschaftlichen Arbeitsmaschine 1, im Folgenden auch als Fahrzeuglängsrichtung F_{L} bezeichnet, die in x-Achsenrichtung verläuft, die zweite Erstreckungsrichtung ist die Breitenrichtung der landwirtschaftlichen Arbeitsmaschine 1, im Folgenden auch als Fahrzeugbreitenrichtung F_{B} bezeichnet, die in y-Achsenrichtung verläuft, und die dritte Erstreckungsrichtung ist die Höhenrichtung der landwirtschaftlichen Arbeitsmaschine 1, im Folgenden auch als Fahrzeughöhenrichtung F_{H} bezeichnet, die in z-Achsenrichtung verläuft.

Der Traktor 2 umfasst unter anderem einen Maschinenrahmen 3, Bodeneingriffsmittel 4, die einer Vorderachse 5 und einer Hinterachse 6 zugeordnet sind, sowie eine auf dem Maschinenrahmen 3 gelagerte Kabine 7. Zumindest zwei der, insbesondere die in einem vorderen Bereich des Traktors 2 angeordneten, Bodeneingriffsmittel 4 sind mittels eines - in den FIGs. nicht dargestellten - Lenkrads lenkbar. Die Bodeneingriffsmittel 4 können wahlweise als Räder oder aber als Raupenlaufwerke ausgebildet sein, wobei auch eine Kombination von Rädern und Raupenlaufwerken möglich ist. Ferner ist es möglich, dass alle vier Bodeneingriffsmittel mittels des - in den FIGs. nicht dargestellten - Lenkrads lenkbar sind. In der Kabine 7 kann sich ein - in den FIGs. ebenfalls nicht dargestellter - Bediener des Traktors 2 zur Steuerung derselben aufhalten. Hierzu ist innerhalb der Kabine 7 üblicherweise eine Bedien- und Steuereinrichtung 8 zur Bedienung und Steuerung des Traktors 2 angeordnet. Zum Antrieb und zur Bereitstellung der zum Betrieb des Traktors 2 benötigten Leistung weist der Traktor 2 ein Antriebsaggregat 9, vorzugsweise in Form eines Verbrennungsmotors, auf. Zur Kühlung des Antriebsaggregats 9 ist eine Kühlereinheit 10 vorgesehen, welche einen Lüfter und einen Kühler zur Kühlung des Antriebsaggregats 9 umfassen kann.

Zumindest das Antriebsaggregat 9 und die Kühlereinheit 10 sind zusammen in einem Motorraum 11 angeordnet, wobei der Motorraum 11 durch eine Motorhaube 12 zumindest bereichsweise begrenzt bzw. umschlossen ist. Zumindest bereichsweise begrenzt bzw. umschlossen bedeutet in diesem Zusammenhang, dass in einem Verkleidungselement der Motorhaube 12 Öffnungen vorgesehen sein können, die der Aufnahme von Zuluft und Abgabe von Abluft zwecks Kühlung des Antriebsaggregats 9 dienen. Die Motorhaube 12 ist zwischen einer Schließstellung, in der die Motorhaube 12 die im Motorraum 11 angeordneten Aggregate 9, 10 begrenzt bzw. umschließt, und einer Offenstellung, in der die Motorhaube 12 einen Zugang zum Motorraum 11 und den darin angeordneten Aggregaten 9, 10 freigibt bzw. ermöglicht, verschwenkbar.

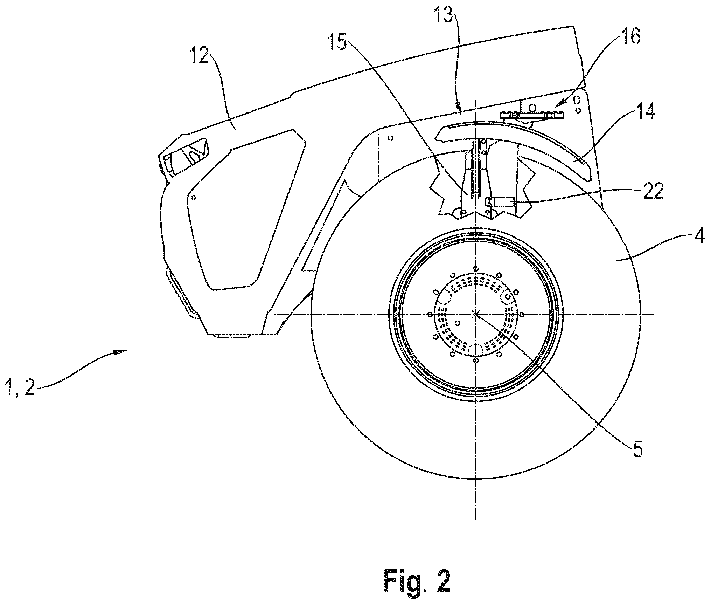

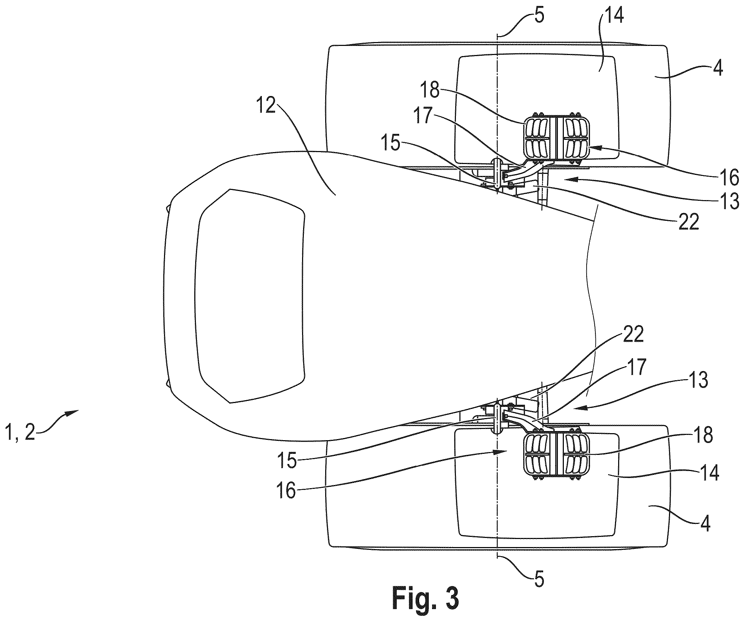

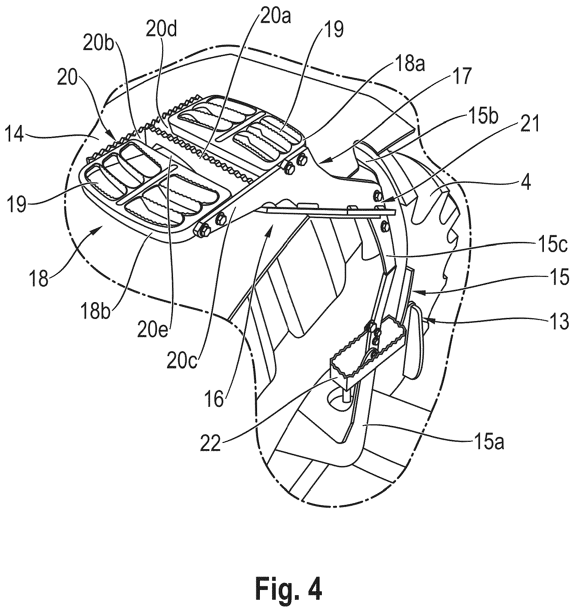

Der Traktor 2 umfasst weiterhin zumindest ein, vorzugsweise wie in den FIGs. 2 und 3 dargestellt zwei, Kotflügelsystem(e) 13, welches einem der lenkbaren Bodeneingriffsmittel 4 zugeordnet ist. Das Kotflügelsystem 13 umfasst einen Kotflügel 14 zur zumindest teilweisen Einfassung des zugeordneten Bodeneingriffsmittels 4 sowie eine Befestigungseinrichtung 15 zur Befestigung bzw. Anbringung des Kotflügels 14 am Traktor 2. Das Kotflügelsystem 13 ist im Detail in FIG. 4 dargestellt.

Der Kotflügel 14 dient dazu, von dem zugehörigen Bodeneingriffsmittel 4 bei einer Fahrbewegung des Traktors 2 aufgeschleuderte Erde oder Schlamm abzufangen und somit die Sicht des Bedieners freizuhalten. Der Kotflügel 14 ist dabei zumindest teilweise oberhalb des entsprechend zugeordneten Bodeneingriffsmittels 4 angeordnet, wobei zumindest teilweise oberhalb als in Fahrzeughöhenrichtung F_{H} zumindest teilweise über dem Bodeneingriffsmittel 4 angeordnet zu verstehen ist.

Erfindungsgemäß ist nunmehr vorgesehen, dass das Kotflügelsystem 13 eine Trittstufe 16 umfasst. Die Trittstufe 16 ist an der Befestigungseinrichtung 15 des Kotflügelsystem 13 angeordnet, wobei sie sich an der Befestigungseinrichtung 15 abstützt. Die Trittstufe 16 ist ferner beabstandet vom Kotflügel 14 angeordnet, sodass zwischen dem Kotflügel 14 und der Trittstufe 16 stets ein gewisser Luftspalt ausgebildet wird. Weiterhin ist die Trittstufe 16 derart angeordnet, dass Bereiche der Trittstufe 16 den Kotflügel 14 zumindest in Fahrzeughöhenrichtung F_{H}, also oberhalb, vorzugsweise auch in Fahrzeugbreitenrichtung F_{B}, also seitlich, überdecken bzw. überlappen. Mit anderen Worten, die Trittstufe 16 ist sich an der Befestigungseinrichtung 15 des Kotflügelsystems 13 abstützend bereichsweise über dem Kotflügel 14 schwebend angeordnet. Die Anbringung der Trittstufe 16 ist dabei vorzugsweise lösbar ausgestaltet, besonders bevorzugt wie in den FIGs. 2 bis 4 dargestellt mittels einer Schraubverbindung.

Die Trittstufe 16 wird durch zwei Elemente gebildet. Einerseits umfasst die Trittstufe 16 eine Tragstruktur 17, welche an der Befestigungseinrichtung 15 sich von dieser in Richtung des Kotflügels 14 wegerstreckend angebracht ist. Andererseits umfasst die Trittstufe 16 eine Trittflächenstruktur 18. Die Trittflächenstruktur 18 bildet im Wesentlichen die Plattform, auf welcher ein Bediener zwecks Reinigung einer Windschutzscheibe oder Wartung von Komponenten des Traktors 2 steht. Die Trittflächenstruktur 18 ist an der Tragstruktur 17 angebracht, und zwar derart, dass die gesamte Trittflächenstruktur 18 den Kotflügel 14 in Fahrzeughöhenrichtung F_{H} überdeckt bzw. überlappt. In der Trittflächenstruktur 18 sind zudem bereichsweise Öffnungen 19 ausgebildet. Die Tragstruktur 17 umfasst einen Aufnahmeabschnitt 20 zur Anordnung der Trittflächenstruktur 18 und einen Befestigungsabschnitt 21 zur Anbringung der Trittstufe 16 an der Befestigungseinrichtung 15 des Kotflügelsystem 13. Der Aufnahmeabschnitt 20 der Tragstruktur 17 ist dabei als Doppel-T-Profil, einen Steg 20a sowie zwei Schenkel 20b, 20c umfassend, ausgebildet. Durch die Ausgestaltung der Tragstruktur 17 als Doppel-T-Profil werden durch den Steg 20a und die beiden Schenkel 20b, 20c zwei durch den Steg 20a getrennte Freiräume 20d, 20e gebildet. Die Trittflächenstruktur 18 umfasst ein erstes Trittflächenelement 18a und ein zweites Trittflächenelement 18b. Jeweils eines der beiden Trittflächenelemente 18a, 18b ist in einem der durch das Doppel-T-Profil gebildeten Freiräume 20d, 20e des Aufnahmeabschnitts 20 angeordnet. Wie auch bei der Anbringung der Trittstufe 16 ist die Anbringung der Trittflächenstruktur 18 bzw. der beiden Trittflächenelemente 18a, 18b an der Tragstruktur 17 bzw. am Aufnahmeabschnitt 20 vorzugsweise lösbar ausgestaltet, besonders bevorzugt wie in den FIGs. 2 bis 4 dargestellt mittels einer Schraubverbindung.

Die Befestigungseinrichtung 15 ist tragarmförmig ausgebildet, insbesondere als L-förmiger Tragarm, und umfasst einen ersten Endabschnitt 15a zur Anbindung der Befestigungseinrichtung 15 am Traktor 2 und einen dem ersten Endabschnitt 15a beabstandet gegenüberliegenden zweiten Endabschnitt 15b zur Anbindung des Kotflügels 14 an der Befestigungseinrichtung 15. Zwischen dem ersten Endabschnitt 15a und dem zweiten Endabschnitt 15b erstreckt sich ein Zwischenabschnitt 15c. Die Trittstufe 16 ist am Zwischenabschnitt 15c der tragarmförmigen Befestigungseinrichtung 15 angebracht, und zwar mittels des Befestigungsabschnittes 21 der Tragstruktur 17.

Neben der Trittstufe 16 umfasst das Kotflügelsystem 13 weiterhin ein Stützelement 22. Das Stützelement 22 ist dazu vorgesehen und eingerichtet, einen Zugang zur Trittstufe 16 zu ermöglichen bzw. zu vereinfachen. Das Stützelement 22 ist als abgekantetes Blech ausgestaltet und an der Befestigungseinrichtung 15 des Kotflügelsystems 13 angeordnet, und zwar ebenfalls am Zwischenabschnitt 15c der Befestigungseinrichtung 15. Die Anordnung erfolgt dabei derart, dass das Stützelement 22 zwischen der Anbringungsstelle der Trittstufe 16 und dem ersten Endabschnitt 15a der Befestigungseinrichtung 15 positioniert ist. In einer alternativen Ausgestaltung kann das Stützelement 22 auch als Hohlprofil ausgestaltet sein. Wie auch die Anbringung der Trittstufe 16 ist die Anbringung des Stützelements 22 dabei vorzugsweise lösbar ausgestaltet, besonders bevorzugt wie in den FIGs. 2 bis 4 dargestellt mittels einer Schraubverbindung.

Das Stützelement 22, die Trittflächenstruktur 18 und/oder die Tragstruktur 17 weisen zumindest bereichsweise eine Profilierung auf. Die Profilierung ist bevorzugt, wie insbesondere in FIG. 4 deutlich sichtbar, als Wellenprofilierung ausgebildet, kann allerdings alternativ auch als Sägezahnprofilierung ausgebildet sein und/oder über eine Rauheit ausgebildet werden.

Abschließend sei angemerkt, dass die vorstehend beschriebenen Ausführungsformen lediglich zur Beschreibung der beanspruchten Lehre dienen, diese jedoch keinesfalls als einschränkend oder erschöpfend anzusehen sind.

### Bezugszeichenliste

| | | | |
|---|---|---|---|
| 1 | Landwirtschaftliche Arbeitsmaschine | 15c | Zwischenabschnitt |
| | | 16 | Trittstufe |
| 2 | Traktor | 17 | Tragstruktur |
| 3 | Maschinenrahmen | 18 | Trittflächenstruktur |
| 4 | Bodeneingriffsmittel | 18a, 18b | Trittflächenelement |
| 5 | Vorderachse | 19 | Öffnung |
| 6 | Hinterachse | 20 | Aufnahmeabschnitt |
| 7 | Kabine | 20a | Steg |
| 8 | Steuereinrichtung | 20b, 20c | Schenkel |
| 9 | Antriebsaggregat | 20d, 20e | Freiraum |
| 10 | Kühlereinheit | 21 | Befestigungsabschnitt |
| 11 | Motorraum | 22 | Stützelement |
| 12 | Motorhaube | | |
| 13 | Kotflügelsystem | F_{L} | Fahrzeuglängsrichtung |
| 14 | Kotflügel | F_{B} | Fahrzeugbreitenrichtung |
| 15 | Befestigungseinrichtung | F_{H} | Fahrzeughöhenrichtung |
| 15a, 15b | Endabschnitt | | |

## Patentansprüche

1. Kotflügelsystem (13) für eine landwirtschaftliche Arbeitsmaschine (1), insbesondere einen Traktor (2), wobei das Kotflügelsystem (13) einen Kotflügel (14) zur zumindest bereichsweisen Einfassung eines Bodeneingriffsmittels (4), insbesondere eines vorderen Bodeneingriffsmittels (4), der Arbeitsmaschine (1) und eine Befestigungseinrichtung (15) zur Befestigung des Kotflügels (14) an der Arbeitsmaschine (1) umfasst,
**dadurch gekennzeichnet, dass**
das Kotflügelsystem (13) eine Trittstufe (16) umfasst, wobei die Trittstufe (16) an der Befestigungseinrichtung (15), sich an dieser abstützend, vorzugsweise lösbar, angebracht ist.

2. Kotflügelsystem (13) nach Anspruch 1, **dadurch gekennzeichnet, dass** die Trittstufe (16) beabstandet vom Kotflügel (14) angeordnet ist, und zwar derart, dass Bereiche der Trittstufe (16) den Kotflügel (14) zumindest in Fahrzeughöhenrichtung (F_{H}) überdecken.

3. Kotflügelsystem (13) nach Anspruch 1 oder 2, **dadurch gekennzeichnet, dass** die Befestigungseinrichtung (15) tragarmförmig ausgebildet ist und einen ersten Endabschnitt (15a) zur Anbindung der Befestigungseinrichtung (15) an der Arbeitsmaschine (1) und einen dem ersten Endabschnitt (15a) beabstandet gegenüberliegenden zweiten Endabschnitt (15b) zur Anbindung des Kotflügels (14) an der Befestigungseinrichtung (15) umfasst, wobei sich zwischen dem ersten Endabschnitt (15a) und dem zweiten Endabschnitt (15b) ein Zwischenabschnitt (15c) erstreckt, wobei die Trittstufe (16) am Zwischenabschnitt (15c) angebracht ist.

4. Kotflügelsystem (13) nach Anspruch 3, **dadurch gekennzeichnet, dass** die Befestigungseinrichtung (15) als im Wesentlichen L-förmiger Tragarm ausgebildet ist.

5. Kotflügelsystem (13) nach einem der Ansprüche 1 bis 4, **dadurch gekennzeichnet, dass** das Kotflügelsystem (13) ein Stützelement (22) für einen Zugang zur Trittstufe (16) umfasst, wobei das Stützelement (22), vorzugsweise lösbar, an der Befestigungseinrichtung (15) angeordnet ist.

6. Kotflügelsystem (13) nach Anspruch 5 in Kombination mit Anspruch 3, **dadurch gekennzeichnet, dass** das Stützelement (22) am Zwischenabschnitt (15c) der Befestigungseinrichtung (15) zwischen der Anbringungsstelle der Trittstufe (16) und dem ersten Endabschnitt (15a) angeordnet ist.

7. Kotflügelsystem (13) nach Anspruch 5 oder 6, **dadurch gekennzeichnet, dass** das Stützelement (22) als abgekantetes Blech oder als Hohlprofil ausgebildet ist.

8. Kotflügelsystem (13) nach einem der Ansprüche 1 bis 7, **dadurch gekennzeichnet, dass** die Trittstufe (16) eine Tragstruktur (17) umfasst, welche an der Befestigungseinrichtung (15) sich von dieser, vorzugsweise in Richtung des Kotflügels (14), wegerstreckend angebracht ist, wobei die Trittstufe (16) eine Trittflächenstruktur (18) umfasst, welche an der Tragstruktur (17), vorzugsweise lösbar, angeordnet ist.

9. Kotflügelsystem (13) nach einem Anspruch 8 in Kombination mit Anspruch 2, **dadurch gekennzeichnet, dass** die Trittflächenstruktur (18) derart an der Tragstruktur (17) angebracht ist, dass die gesamte Trittflächenstruktur (18) den Kotflügel (14) in Fahrzeughöhenrichtung (F_{H}) überdeckt.

10. Kotflügelsystem (13) nach einem der Ansprüche 5 bis 9, **dadurch gekennzeichnet, dass** das Stützelement (22), die Trittflächenstruktur (18) und/oder die Tragstruktur (17) zumindest bereichsweise eine Profilierung aufweisen.

11. Kotflügelsystem (13) nach Anspruch 8 bis 10, **dadurch gekennzeichnet, dass** in der Trittflächenstruktur (18) bereichsweise Öffnungen (19) ausgebildet sind.

12. Kotflügelsystem (13) nach einem der Ansprüche 8 bis 11, **dadurch gekennzeichnet, dass** die Tragstruktur (17) einen Aufnahmeabschnitt (20) zur Anordnung der Trittflächenstruktur (18) und einen Befestigungsabschnitt (21) zur Anbringung der Trittstufe (16) an der Befestigungseinrichtung (15) umfasst.

13. Kotflügelsystem (13) nach Anspruch 12, **dadurch gekennzeichnet, dass** der Aufnahmeabschnitt (20) der Tragstruktur (17) als Doppel-T-Profil ausgebildet ist, wobei die Trittflächenstruktur (18) ein erstes Trittflächenelement (18a) und ein zweites Trittflächenelement (18b) umfasst, wobei ein Trittflächenelement (18a, 18b) der Trittflächenstruktur (18) jeweils in einem zwischen dem Steg (20a) und den beiden Schenkeln (20b, 20c) des Doppel-T-Profils gebildeten Freiraum (20d, 20e) des Aufnahmeabschnitts (20), vorzugsweise lösbar, angeordnet ist.

14. Landwirtschaftliche Arbeitsmaschine (1), insbesondere Traktor (2), wobei die Arbeitsmaschine (1) zumindest zwei lenkbare Bodeneingriffsmittel (4) umfasst, **dadurch gekennzeichnet, dass**
die Arbeitsmaschine (1) zumindest ein Kotflügelsystem (13) nach einem der vorhergehenden Ansprüche umfasst, welches zumindest einem der Bodeneingriffsmittel (4) zugeordnet ist.
